Europäisches Patentamt

European Patent Office

Office européen des brevets

(19)

(11) Publication number: **0 134 948**
**A2**

(12) # EUROPEAN PATENT APPLICATION

(21) Application number: **84107586.4**

(22) Date of filing: **29.06.84**

(51) Int. Cl.⁴: **B 01 D 53/14**

(30) Priority: 30.06.83 US 509455
19.06.84 US 620191

(43) Date of publication of application:
27.03.85 Bulletin 85/13

(84) Designated Contracting States:
AT BE CH DE FR GB IT LI LU NL SE

(71) Applicant: UNION CARBIDE CORPORATION
Old Ridgebury Road
Danbury Connecticut 06817(US)

(72) Inventor: Dibble, John Harold
Gilbert Lane
Putnam Valley New York 10579(US)

(74) Representative: Schmied-Kowarzik, Volker, Dr. et al,
Patentanwälte Dr. V. Schmied-Kowarzik Dipl.-Ing. G.
Dannenberg Dr. P. Weinhold Dr. D. Gudel Dipl.-Ing. S.
Schubert Dr. P. Barz Siegfriedstrasse 8
D-8000 München 40(DE)

(54) Absorbent formulation for enhanced removal of acid gases from gas mixtures and processes using same.

(57) Acid gas absorption of $H_2S$ by select aqueous alkaline absorbents, is enhanced by adding low $pK_a$ acid or acid-forming material providing acid sufficient to protonate up to 22% of the absorbent, thereby altering the absorbent-acid gas vapor-liquid equilibrium.

EP 0 134 948 A2

## CROSS REFERENCE TO RELATED APPLICATION

This application is a continuation-in-part of U.S. Patent Application Serial No. 509,455, filed June 30, 1983, now abandoned.

## BACKGROUND OF THE INVENTION

### Field of the Invention

This invention relates to the removal of acid gases from gaseous mixtures and to compositions useful in the manufacture of aqueous alkaline absorbents. The compositions are expressly characterized by their efficiency in removing acid gases, such as $H_2S$, from gaseous mixtures. Such gaseous mixtures include natural gases, refinery gases, Claus gases, coke oven off gases, coal gasification gases, landfill gases, any synthetic gas product and the like. The composition is particularly effective in removing acid gas from low pressure gas streams containing $H_2S$.

### Description of the Prior Art

Much research and effort has been expended for the purpose of improving the treatment of gas streams to remove acid components.

Aqueous alkanolamine solutions have been used for over 50 years to remove acid gas components from gas streams. Hydrogen sulfide ($H_2S$) is very toxic and must be removed before high pressure natural gas streams can enter a pipeline system. $H_2S$ is also removed from lower pressure refinery

13994-1

gas streams and from atmospheric pressure Claus tail gas treating units. Two deficiencies exist in the state of the art amine-based technology for these applications. First, $H_2S$ absorption into the amine solutions becomes more difficult at lower gas pressures simply due to the lower $H_2S$ partial pressure driving force. At the high pressures of most natural gas streams, $H_2S$ generally can be easily removed down to the 4 ppm pipeline specification. This specification often cannot be met at the lower pressure of refinery gas streams. The 10 ppm $H_2S$ specification for the very low pressure Claus tail gas streams is essentially impossible to achieve by amine treating and is dealt with by costly post incineration which converts the $H_2S$ not removed by absorption to $SO_2$ which has a higher specification. Unfortunately, $SO_2$ is suspected as being responsible for forming "acid rain" and it is highly desirable to avoid its introduction into the atmosphere.

A second disadvantage is that the primary and secondary amines conventionally used in absorbent solutions also coabsorb $CO_2$ which is often present and may not need to be completely or even partially removed. Removing $CO_2$ adds directly to equipment sizes and processing costs which are significant at current energy prices. Furthermore, avoiding $CO_2$ removal is vital to Claus tail gas processing when the absorbed $H_2S$ is recycled to the Claus unit. Recycling $CO_2$, an inert gas, significantly dilutes the $H_2S$ stream, often to the point that a conventional Claus reactor

13994-1

cannot function. Diisopropanolamine (DIPA) and methyldiethanolamine (MDEA) exhibit kinetic selectivity for $H_2S$ over $CO_2$ due to a relatively slow hydration step that $CO_2$ must undergo to form carbonic acid before reacting with these amines. $H_2S$ does not have to go through this step and can react directly with these amines resulting in a much faster rate of absorption. These amines exhibit "kinetic" selectivity and can be used in processes which have been designated to exploit the much faster absorption rate of $H_2S$ compared to $CO_2$ to achieve selective $H_2S$ removal. Nonetheless, some $CO_2$ is still removed in such methods of use and further improvement in the kinetic selectivity properties of such solvents is desirable.

U.S. Patent No. 2,718,454 describes a process for using potash and similar alkali metal salts in conjunction with amines such as monoethanolamine, diethanolamine and triethanolamine to remove acid gases from a gas mixture. The combination of alkali metal compounds in conjunction with the designated amine allegedly yields the higher capacity for acid gases than systems using the amines alone.

U.S. Patent No. 3,144, 301 discloses the use of potassium carbonate in conjunction with diethanolamine and monoethanolamine to remove $CO_2$ from gas mixtures.

U.S. Patent Nos. 3,637,345, 3,763,434 and 3,848,057 disclose processes for removing acid gases by using aqueous carbonate scrubbing solutions activated by an amine. U.S. Patent No. 3,848,057

13994-1

describes in addition the addition of a weakly acidic $CO_2$ hydration catalyst such as boric acid, sulfurous acid or formaldehyde but specifies amounts of such acidic materials far in excess of those amounts that are useful in achieving the advantages of the present invention. Furthermore, U. S. Patent No. 3,848,057 is concerned with the kinetics of $CO_2$ removal using boric acid and other weak acidic $CO_2$ hydration catalysts to speed up the absorption of $CO_2$ and is not concerned with altering the vapor-liquid equilibria of gases containing $H_2S$ and absorbents in contact therewith. Boric acid which is the weak acid preferred by this patent is inoperative in the present invention. The amounts of the weak acidic $CO_2$ hydration catalyst disclosed as most advantageous by U. S. Patent No. 3,848,057 are not only inoperative in the present invention but are counter-productive in producing an off gas that is higher in $H_2S$ content than the $H_2S$ content of an off gas where no acid is used.

U.S. Patent No. 3,856,921 discloses a process for removing acid gas by use of a basic salt of an alkali or alkaline earth metal and an amine activator.

British Patent No. 1,063,517 also discloses the use of potassium carbonate and potassium borate in conjunction with particular amines to avoid corrosion problems and accelerate the absorption and subsequent deabsorption of $CO_2$ and $H_2S$.

U.S. Patent Nos. 3,856,926, 3,685,960 and 3,896,212 teach the improvement of $CO_2$ absorption rates into alkali metal salt solutions by adding small amounts of water soluble, substituted amines. The improvements as claimed in these patents as well as all those mentioned hereinabove are purely kinetic and none of these patents discuss any improvements due to alterations in the equilibrium curves. It is known that $CO_2$ absorption in substantially all regenerable basic mediums is mass transfer limited. Therefore, equilibrium changes at low $CO_2$ concentrations could not be perceivable under dynamic conditions and certainly could not be useful.

U.S. Patent Nos. 3,622,267 and 4,336,233 both discuss improved $CO_2$ absorption rates obtained by adding small amounts of certain secondary amines to solutions of tertiary amines which, when used alone, exhibit extremely slow $CO_2$ absorption rates. The improved $CO_2$ absorption rates are however kinetic and not an equilibrium phenomenon.

U.S. Patent Nos. 4,112,050 and 4,112,051 disclose improvements due to alterations in equilibrium curves for $CO_2$ absorption obtained at high $CO_2$ concentration levels. Increased absorption capacity results when sterically hindered amines are added to potassium carbonate solutions. Equilibrium effects resulting in lower $CO_2$ levels in the absorber off gas are not expressly disclosed or obvious in the disclosure of these patents. U.S. Patent No. 4,112,051 discusses the application of the hindered amine concept to non-aqueous solutions.

U.S. Patent Nos. 2,937,071, 3,037,844, 3,086,838 and 3,395,978 each disclose the use of

13994-1

alkali metal arsenite compounds as additives to potassium carbonate absorbing solutions or alone in absorbing solutions to yield greater $CO_2$ absorption rates through kinetic means rather than equilibrium means.

U. S. Patent No. 3,139,324 (Housset) discloses a process for removing $CO_2$ and $H_2S$ from gaseous mixtures using a mixture of ethanolamine and a weak acid. The only disclosed relative amounts of ethanolamine to acid are 2:1 molar. Such a process is disclosed as removing the disturbing action of $CO_2$ on the dissolution in water of sulfuretted hydrogen without hindering the dissolution of the actual carbon dioxide.

U. S. Patent No. 4,080,423 (Smith et al.) discloses a system for improving the rate of acid gas adsorption by using an alkaline absorbent in combination with a weak acid having a pK greater than 7.

U. S. Patent No. 2,722,500 (Rippie et al.) pertains to a process for removing $H_2S$ and $CO_2$ from liquid and gaseous petroleum products such as natural gas, by using an alkanolamine in conjunction with a dual ionizing acid. The disclosed process is directed towards removing volatile acidic substances from liquid hydrocarbons utilizing primarily triethanolamine phosphate.

U. S. Patent No. 4,153,674 (Verloop et al.) concerns a process for recovering sulfur from sulfur-compound containing gases by reducing all sulfur constituents of the gas mixture in the presence of recycled off-gas followed by absorption using a liquid and regeneratable hydrogen-sulfide

13994-1

0134948

absorbent such as alkanolamines. It is disclosed that a strong acidic compound may be added to the alkanolamine absorbent to reduce the amount of stripping steam required and to lower the amount of unabsorbed hydrogen sulfide. Preferably, enough acidic compound is added to acidify 0.1 to 15 mole % of the alkanolamine.

None of the above-mentioned patents however disclose, teach or suggest the use of a relatively small amount of an acid having a $pK_a$ of 6 or less or acid-forming material capable of forming an acid having a $pK_a$ of 6 or less in aqueous medium wherein said acid or acid-forming material are added to an alkaline scrubbing liquid containing a select alkaline absorbent in an amount sufficient to protonate more than 0% and up to 22% of said alkaline absorbent to provide enhanced acid gas removal.

## SUMMARY OF THE INVENTION

This invention is based on the discovery that vapor-liquid equilibria of aqueous alkaline absorbent solutions are favorably altered to yield more efficient absorption and stripping of acid gases containing $H_2S$ from gaseous mixtures containing same by the addition of very small amounts of acid or acid-forming material to a specific class of absorbents. It has been found that this effect is pronounced at low acid gas concentrations in the gaseous mixture which results in even lower concentrations in the treated gaseous mixture. This can be of a particular benefit in treating Claus tail gas where $H_2S$ needs to be

13994-1

removed down to 10 ppm to satisfy environmental regulations. Under current absorption technology heretofore available in the prior art, it has been possible to achieve H$_2$S removal in Claus tail gas only down to 100 to 250 ppm. In order to bring the H$_2$S content down to acceptable levels, it is current practice to incinerate the residual H$_2$S to SO$_2$ which has been accorded a higher allowable limit under current EPA regulations. Aside from the fact that such incineration is quite costly, it appears to be the consensus that the release of SO$_2$ into the atmosphere is the chief responsibility for the production of "acid rain."

The present invention provides a striking improvement in the efficiency of a cyclic absorption/regeneration process when small amounts of a relatively strong acid are added to particular aqueous alkaline absorbents. Surprisingly the relatively strong acid shifts the vapor/liquid equilibrium curve at low acid gas (H$_2$S) concentrations to afford a greater degree of acid gas (H$_2$S) removal.

The invention provides compositions for mixing with water to provide an aqueous alkaline liquid for scrubbing acid gases. The invention also provides aqueous alkaline solutions for scrubbing acid gases and it also provides procedures and methods for removing H$_2$S as a constituent from gases by washing the gases with a select aqueous alkaline scrubbing material containing relatively small amounts of relatively strong acids and subsequently regenerating the scrubbing liquid.

13994-1

Tripotassium phosphate ($K_3PO_4$) was promoted in the 1950's as a selective solvent for absorbing $H_2S$ from gas streams containing $H_2S$, $CO_2$, and inerts. In pursuit of a goal to further improve the selective properties of an MDEA-based formulation, a test program was conducted to determine if a combination of MDEA and $K_3PO_4$ could provide a synergistic improvement. Initial absorber results showed no effect on $CO_2$, but did show enhanced $H_2S$ removal. Improved selectivity was implied because fewer absorber trays would be needed for $H_2S$ removal and by using less trays $CO_2$ absorption could be reduced. However, it was found that the stronger basicity of $K_3PO_4$ hindered regeneration which is essential in commercial practice. In fact, it was discovered that $K_3PO_4$ actually decreased $H_2S$ removal under cyclic use conditions. This result was unexpected and led to further investigation of the absorption/regeneration nature of MDEA at low $H_2S$ concentrations. It was theorized pursuant to this invention that perhaps a base weaker than MDEA or even an acid might produce the opposite effect when added to MDEA and thereby enhance $H_2S$ removal. Tests with $K_2HPO_4$ which has a basicity close to that of MDEA, produced results similar to that of MDEA only. This is expected according to the theory of the present invention. Tests with small amounts of $H_3PO_4$ in MDEA have shown an increase in the total $H_2S$ removed under cyclic use conditions. The results also indicate that there is an optimum $H_3PO_4$ concentration of about 1.4% in 50:50

13994-1

MDEA:water scrubbing solution which yields the maximum improvement. Other acids show similar results. It is theorized that the presence of a small amount of acid favorably alters the $H_2S$-MDEA vapor-liquid equilibria curve and improves overall $H_2S$ removal particularly at low $H_2S$ concentrations found at the lean (top) end of the absorber and at the lean (bottom) end of the stripper.

By studying the absorption of $H_2S$ and $CO_2$ in a laboratory absorber and focussing on the performance at the top of the absorber where $H_2S$ concentrations are low, it was discovered that the addition of small amounts of soluble compounds with a pH different from 50% aqueous MDEA changed the degree of $H_2S$ removal or the concentrations of $H_2S$ in the absorber off gas. To similate a cyclic process, MDEA solutions were prepared containing amounts of $H_2S$ and $CO_2$ representative of the rich solution following an absorption. These solutions were stripped under constant and identical conditions to produce a lean solution for the absorption experiments. It was recognized that additives that affect absorption are also likely to affect desorption which necessitates that the entire cyclic process be simulated. By this method, it has been found that compounds having a higher pH than that of MDEA hinder $H_2S$ removal and yield higher $H_2S$ levels in the absorber off gas. Compounds of lower pH enhance $H_2S$ removal. An explanation is offered that the compounds alter the shape of the MDEA-$H_2S$ vapor-liquid equilibrium curve which in

13994-1

turn affects the efficiency and degree of $H_2S$ removal in a cyclic system employing an absorber and a stripper, each having a finite number of trays. Adding a small amount of an acidic compound pursuant to this invention produces the favorable effect of enhanced $H_2S$ removal. Acids, such as phosphoric acid, whose anions exhibit low corrosivity in basic medium are preferred. It was also learned that maximum $H_2S$ removal occurs when the phosphoric acid concentration is in the range of 0.5-2.5% based on the total weight of a 50:50 MDEA:water absorbing solution containing same. At higher concentrations the MDEA becomes significantly neutralized by the acid and begins to lose the necessary basicity to remove $H_2S$.

The improvement of the MDEA-acid aqueous mixture in enhancing the removal of $H_2S$ can be exploited in three ways:

1) Maintain process conditions constant and produce an absorber product gas lower in $H_2S$ content.

2) Employ less absorber trays such that $H_2S$ removal is the same as if no acid were present. This will result in less $CO_2$ absorption, thus improving the selectivity. A further benefit will be a reduced reboiler energy demand because of the reduced $CO_2$ load.

3) If employing less absorber trays is not possible because multiple lean solution feed points are not available, energy savings can be realized by reducing the reboiler rate until the $H_2S$ level in the absorber off gas increases to the

13994-1

0134948

level without the acid present. The effective concentration range is 0-4.5% $H_3PO_4$ and the optimum is .5-2.5% based on the total weight of a 50:50 MDEA:water absorbing solution containing same.

## DETAILED DESCRIPTION OF THE INVENTION

In accordance with this invention, the novel compositions for mixing with water to provide aqueous, alkaline liquids for scrubbing acid gases containing $H_2S$ are prepared by simply mixing an acid having a $pK_a$ of 6 or less or an acid-forming material capable of forming in an aqueous medium an acid having a $pK_a$ of 6 or less with a select alkaline material in an amount sufficient to protonate more than 0% but not more than 22% of said alkaline material. Preferably an acid having a $pK_a$ of 5 or less and most preferably 4 or less are used and amounts sufficient to provide 0.1 to 22% and most preferably 2 to 13% protonation of the alkaline material are employed.

The novel aqueous alkaline scrubbing solutions are prepared by simply mixing the above-mentioned composition with water in an amount adequate to provide 5 to about 70 wt. %, preferably 20 to 60 wt. %, of the alkaline material based on the total weight of the scrubbing liquid or solution. Alternatively, the novel scrubbing solution can be prepared by dissolving in water a sufficient amount of the alkaline material to provide a 5 to 70 wt. %, preferably 20 to 60 wt. %, aqueous solution of said alkaline material in said solution and mixing a sufficient amount of an acid having a $pK_a$ of 6 or less, preferably 5 or less,

13994-1

most preferably 4 or less, or an acid-forming material capable of forming an acid having $pK_a$ characteristics as defined above. The amount of acid or acid-forming material being added is sufficient to protonate more than 0% and up to 22%, preferably 2 to 13%, of the alkaline material. The order of addition is not critical. For example, the alkaline material can be added to the water before, after or simultaneously with the acid or acid-forming material.

This invention applies to a select class of alkaline materials suitable for forming an aqueous absorbent, which do not evolve an acidic gas, e.g., $CO_2$ or $SO_2$, upon acidification, and which provide enhanced acid gas removal when combined with the appropriate amount of acid or acid-forming material. For example, the invention is advantageously used in conjunction with alkaline solutions suitable for absorbing $H_2S$ gas and made from alkaline materials such as secondary or tertiary diethanolamines including methyldiethanolamine, diethanolamine, or mixtures thereof. Alkali metal carbonates are not suitable for forming an aqueous absorbent because the carbonates are converted to $CO_2$ which leaves the system in the off gas and forms the alkali metal salt of the acid added pursuant to this invention. Thus, the acid content of the absorbent solution is not effectively increased. For example, when phosphoric acid is used pursuant to this invention the alkali metal carbonate is converted alkali metal phosphate, e.g., $K_3PO_4$, and $CO_2$ gas which

13994-1

leaves the system. Thus, the addition of more and more phosphoric acid fails to effectively increase the acid content until all of the carbonate has been converted to the phosphate and $CO_2$.

Only alkaline materials providing enhanced acid gas removal, when combined with an appropriate amount and type of acid or acid-forming material, are suitable in the present invention. The select class of alkaline materials providing such enhanced acid gas removal are readily determinable using well established procedures in the art by comparing the acid gas removal performance of two aqueous alkaline absorbent solutions, with and without the requisite protonation of the alkaline material. The alkaline absorbent solution which provides significant, i.e. measurable beyond experimental error, increases in acid gas removal when appropriately protonated, contains the select alkaline absorbent. The enhanced level of acid gas removal provides treated gaseous mixtures containing very low amounts of acid gas, typically 10 ppm or less, and preferably 1 ppm or less.

Suitable alkaline absorbing solutions are selected from water soluble alkaline amines such as an alkanol amine, e.g. monoethanolamine and diethanolamine; alkylalkanolamines such as methyldiethanolamine, ethylamino-ethanol, cyclohexylaminoethanol, 2-amino-2-methyl-1-propanol and the like. Particularly preferred alkaline materials which have been found to provide enhanced acid gas recovery are secondary or tertiary diethanolamines, such as diethanolamine (DEA), methyldiethanolamine (MDEA), and mixtures thereof.
The tertiary amines are preferred inasmuch as
scrubbing solutions containing tertiary amines
selectively absorb hydrogen sulfide over carbon
dioxide. The primary and secondary amines provide
little, if any, selectivity in absorbing the $H_2S$
over $CO_2$. Mixtures of alkaline materials can also
be used. In those instances where the selective
absorption phenomena is not important, any aqueous
alkaline solution providing enhanced acid gas
removal, preferably an aqueous alkaline amine
solution, is useful as a scrubbing solution. The
concentration of alkaline material in the scrubbing
solution can be varied over a wide range from about
5 to about 70 wt. % of the alkaline material based
on the weight of the scrubbing solution.
Preferably, the scrubbing solution contains 20 to 60
wt. % of the alkaline materials.

Suitable acids that can be used in the
present invention can be characterized as strong
acids which include any organic or inorganic acid
having a $pK_a$ of 6 or less, preferably 5 or less
and most preferably 4 or less. Acids that can be
used include phosphoric acid which is preferred
because of its low corrosive effects, phosphorous
acid, hydrochloric acid, sulfuric acid, sulfurous
acid, nitrous acid, pyrophosphoric acid, telurous
acid and the like. Also, included as suitable acids
are organic acids such as acetic acid, formic acid,
adipic acid, benzoic acid, n-butyric acid,
chloroacetic acid, citric acid, glutaric acid,
lactic acid, malonic acid, oxalic acid, o-phthalic

13994-1

acid, succinic acid, o-toluic acid and the like. In addition, acid-forming materials that are capable of forming acids upon contact with water can be used. The acids formed from such acid-forming materials useful in this invention have a $pK_a$ of 6 or less, preferably 5 or less and most preferably 4 or less. A suitable acid forming material is sulfur dioxide.

The absolute amount of acid or acid-forming material can also vary over a wide range which is best expressed in terms of the weight percent of protonation of the alkaline absorbent. The amount of acid used in the invention relative to the amount of alkaline absorbent is narrowly critical and will vary depending upon the type of alkaline absorbent. For MDEA it has been found that protonation of more than 0% of the alkaline absorbent up to as much as 22% protonation of the alkaline absorbent, preferably not more than 20% protonation, is sufficient. Preferably the range extends from amounts sufficient to protonate 0.1 to 22% of the alkaline absorbent, preferably to protonate not more than 20% of the alkaline absorbent. More preferably the range encompasses those amounts sufficient to protonate 2 to 13% of the alkaline absorbent. In the case of the most preferable acid, namely, phosphoric acid, the preferred amount in a 50:50 MDEA:water solution is from more than 0 wt. % up to about 4.5 wt. %, preferably 0.5 to about 2.5 wt. % based on the total weight of the aqueous alkaline absorbent solution containing the phosphoric acid.

The alkaline absorbing solutions may contain optional adjuvants well known to those

13994-1

skilled in the art, such as corrosion inhibitors and physical solvents, in addition to water, the alkaline absorbent, and acid or acid-forming material. If foaming becomes a problem, an antifoaming agent can be added to the absorbent solution at any stage of the process as is well known to those of ordinary skill in the art.

The contacting of the novel aqueous alkaline scrubbing liquid and the acid gas may take place in any suitable contacting tower. The acid gas to be contacted and removed is hydrogen sulfide which may be present in trace amounts in the gaseous mixture. The contacting between the acid gas and the aqueous alkaline absorbent scrubbing liquid can be concurrent or countercurrent; counter current being preferred. The contacting takes place in a single phase without regions of phase immiscibility. Temperatures during the contacting may vary between 40°F. and 250°F., preferably 50°F. to 200°F. Pressures may vary widely. Acceptable pressures are in the range from 0 to 2000 psia, preferably 10 to 1500 psia. As an illustration, the countercurrent contacting to remove the acid gas can take place over a period of 0.01 second or higher, e.g. up to 10 minutes or more. Contacting may take place when the acid gas containing gas is either in the liquid or gaseous state, although the gaseous state is much preferred.

The contacting zone can be a packed tower, plate tower or any known gas scrubber. A stainless steel contacting tower is particularly effective. The tower can be equipped with bubble trays,

13994-1

preforated trays, Raschig rings or any other known packing material which facilitates contacting between the gas and liquid. After a period of time the absorbent liquid becomes substantially saturated with the acid gas $H_2S$. The aqueous alkaline absorbing solution which is substantially saturated with acid gases such as $H_2S$ must then be regenerated to place it into condition for reuse. Illustratively, the aqueous alkaline absorbent liquid can be about 5 to 95% saturated, preferably about 10 to 90% saturated, when it is regenerated.

The regeneration which can take place in a single liquid phase, is usually accompanied by flashing and passing steam through the liquid until the acid gases are stripped out. Upon entering the regeneration unit the absorbent liquid is substantially saturated as indicated above and in one phase. Stripping of the acid gas may be accompanied using known means by blowing with steam or inert gas according to known techniques. The absorbent liquid is tripped down to a very small amount, illustratively, 0.00004 to 0.02, preferably 0.0003 to 0.01, mol of $H_2S$ per mol of alkaline material, e.g. MDEA in the absorbent liquid. The absorbing liquid after being regenerated can be recycled back to the contacting tower. Makeup absorbent liquid may be added as needed. Alternatively the saturated absorbent liquid can be regenerated by inert gas, e.g. nitrogen stripping. Air is an example of an inert gas when the alkaline material in the absorbent liquid is inorganic.

As an illustration, in desorption, i.e. regeneration of the absorbent liquid, the acid gas

13994-1

$H_2S$-rich solution from the absorber in which the acid gas containing mixture is contacted with the aqueous alkaline absorbent liquid, can be sent, in the case of high pressure absorption, first to a flash chamber wherein steam, and $H_2S$, $CO_2$, physically dissolved gases and entrained gases, are flased from the solution at lower pressure. The solution from the flash drum, or from the absorber, in the case of low pressure absorption, can then be steamed stripped in a packed or plate tower. Stripping steam can be generated in or at the base of the stripper. Illustratively, pressure in the flash drum and stripper can be from 1 to 100 psig for the stripper. Illustratively, the temperature of the flash drum can vary from 40°F. to 250°F., preferably 60°F. to 200°F., and in the steam stripper can range between 180°F. to 350°F., preferably 190°F. to 260°F. depending, of course, on stripper pressure. Normally, the gas withdrawn from the top of the stripper contains a high percentage of $H_2S$, e.g., 25% or more, and in such cases the gas withdrawn from the top of the stripper can be used in sulfur recovery units, e.g., Claus units, where the $H_2S$ content is converted into elemental sulfur by known techniques or it can be used as a source of sulfur dioxide in the production of sulfuric acid also according to well known procedures. In those cases where the $H_2S$ content in the stripper off-gas is lower, e.g., 25% or less, the stripper off-gas can be sent to modified Claus units which are equipped to convert relatively low concentrations of $H_2S$ into elemental sulfur.

13994-1

Alternatively, the stripper off-gases of relatively low $H_2S$ concentrations can be incinerated, whereby the volume of gas subjected to incineration is much lower than the volume of the original gas before treatment according to this invention.

By means of the present invention hydrogen sulfide can now be removed, under normal temperature conditions, from high pressure, e.g., more than 100 psia, gaseous mixtures containing same to very low values such as 1 ppm or less thereby eliminating a very serious safety hazard in the case of natural gas intended for residential use. By means of the present invention, $H_2S$ can now be removed, under normal temperature conditions, from low pressure, e.g., from 10 up to 30 psia, gaseous mixtures containing same to very low values each 10 ppm or less to comply with Federal EPA regulations.

## EXAMPLES

The following Examples are presented. The following designations used in the Examples and elsewhere herein have the following meanings.

| | |
|---|---|
| DEA: | diethanolamine |
| DIPA: | diisopropanolamine |
| MDEA: | methyldiethanolamine |
| TEA: | triethanolamine |
| %: | weight percent unles otherwise specified |
| liter/min: | liters per minute |
| ppm: | parts per million on a volume basis which is equivalent to parts per million on a mol basis |
| °F: | degrees Fahrenheit |

13994-1

| mmscf/d: | million standard cubic feet per day |
| gpm: | gallons per minute |
| psia: | pounds per square inch pressure absolute |
| psig: | pounds per square inch pressure gauge |

## EXAMPLES 1-3, A and B

These Examples illustrate the effect of phosphoric acid, $H_3PO_4$, on $H_2S$ removal from an acid gas. In each Example, one liter of an MDEA solution contains:

| $H_2S$ | 0.5% |
| $CO_2$ | 1.0% |
| MDEA | 49.25% |
| $H_2O$ | 49.25% |

In Example A no phosphoric acid was added to this solution but in Examples 1, 2, 3 and B, 0.1, 1, 2 and 5% respectively, of phosphoric acid, $H_3PO_4$ was added to the solution, said percentages being based on the total weight of each of said solutions. The resulting mixture was refluxed for 335 minutes in a 2-liter flask using an electric heating mantle jacket at a Variac setting of 80 volts and a condenser jacketed with cold tap water. At the end of 335 minutes, the power was turned off and the solution was allowed to cool to room temperature. The solution then was pumped at a rate of 9 cc/min. by using a constant displacement piston pump to the top of a vacuum-jacketed, glass column having a one inch inside diameter and 30 sieve trays. Line heaters warmed the solution to 110°F before it entered the column.

13994-1

A feed gas containing 1.5% (15000 ppm) $H_2S$, 30% $CO_2$ and 68.5% nitrogen was heated to 110°F and bubbled through water in a packed vessel to saturate the gas with water. Then the feed gas was passed to a knockout flash to remove any entrained water and thereafter was introduced at the rate of one liter/min. to the bottom of the above-described, trayed column which is maintained at a temperature of 110°F. In the column the feed gas was counter-currently contacted with the MDEA solution. The off gas leaving the top of the absorber was measured in each Example for $H_2S$ content and the results are given in Table I below:

## TABLE I

| Ex. | % $H_3PO_4$* | Mols $H_3PO_4$ Per Mol MDEA | % Protonation | PPM $H_2S$ In Off Gas |
|-----|------------|-----------------------------|---------------|------------------------|
| A | 0 | 0 | 0 | 52 |
| 1 | 0.1 | 0.0024 | 0.49 | 12.5 |
| 2 | 1 | 0.0245 | 4.9 | 1 |
| 3 | 2 | 0.04956 | 9.9 | 2 |
| B | 5 | 0.1278 | 25.6 | 100 |

*Based on the weight of the solution

These results suggest that there is a minimum amount of acid to be added in order to enhance the absorption of the $H_2S$ gas. These results also show that there is a maximum amount above which $H_2S$ removal is not enhanced.

A comparison of Examples A and B clearly illustrates that at the rate of 0.1278 mols of phosphoric acid per mol of MDEA the $H_2S$ content in the off gas is actually increased over and above the amount removed when no acid at all is used.

13994-1

## EXAMPLES 4-7 and C

In each of these Examples an MDEA solution identical to that described in Example A above, that is, with no phosphoric acid addition, was prepared and fed to the top of the absorber at the rate of 7.15 cc/min. The feed gas rate in each case was 0.5 liter/min. Also, the absorber contained only ten sieve trays rather than 30. In Example C no acid was added to the MDEA solution whereas in Examples 4-7 there was respectively added 0.0321% $H_3PO_4$, 0.1% $SO_2$, 0.14% formic acid and 0.112% HCl based on the weight of the MDEA solution. Thereafter, these Examples were carried out in the same manner as described for Examples 1-3, B and C. The amounts of $H_2S$ in the absorber off gas is presented in Table II below.

### TABLE II

| Exh. | Acid Added | % Acid Added | Mols Acid Per Per Mol MDEA | % Proton-ation | PPM $H_2S$ In Off Gas |
|---|---|---|---|---|---|
| C | None | 0 | 0 | 0 | 40 |
| 4 | $H_3PO_4$ | 0.0321 | 0.00079 | 0.158 | 1 |
| 5 | $SO_2$ | 0.1 | 0.00372 | 0.744 | 0.75 |
| ·6 | Formic Acid | 0.14 | 0.00725 | 1.45 | 4 |
| 7 | HCl | 0.112 | 0.00731 | 1.46 | 2 |

These Examples show that even very small amounts of acid are effective in dramatically removing $H_2S$ and reducing $H_2S$ content in the absorber off gas down to 1 ppm or less. These Examples also illustrate the effectiveness of a wide range of acidic materials including an organic acid, another inorganic acid and an acid-forming material.

13994-1

EXAMPLES 8 AND D

The effect of adding phosphoric acid to aqueous MDEA on $H_2S$ absorption was demonstrated in a commercial plant as described below. A 13 tray absorber was operated at 112°F. and 2.3 psig. The feed gas contained approximately 1% $H_2S$, 20% $CO_2$, 6% $H_2O$ and 72% nitrogen and was introduced at the bottom of the absorber at a rate of 1.5 mmscf/d. The lean absorbing solution introduced at the top of the absorber contained 43% MDEA and 57% water. In Example D no acid was added to the absorbing solution. In Example 8, 1.61 wt.% $H_3PO_4$ was added to the absorbing solution thus forming a solution containing 1.61% $H_3PO_4$, 42.31% MDEA and 56.08% water. The degree of protonation, the lean solution circulation and the ppm $H_2S$ in the absorber off gas are given in Table III for Example D and 8.

TABLE III

| Ex. No. | % $H_3PO_4$ Added | % Proton -ation of MDEA | Lean Solution Circulation Rate | PPM $H_2S$ In Off Gas |
|---------|-------------------|-------------------------|--------------------------------|------------------------|
| D | 0 | 0 | 46.4 gpm | 110 |
| 8 | 1.61 | 9.09 | 52.8 gpm | 7 |

These examples demonstrate that, by adding phosporic acid, the $H_2S$ level was reduced by a factor of 15.7 to 1.

EXAMPLES 9 and E

In each of these Examples an MDEA solution identical to that described in Example A above, that is, with no phosphoric acid addition, was prepared and fed to an absorber at the rate of 13 cc/min. The feed gas rate in each case was 0.5 liter/min. Also, the absorber contained 20 sieve trays. In Example E no acid was added to the MDEA absorbing solution whereas in Example 9 0.0321% $H_3PO_4$ was added before refluxing. Thereafter these Examples were carried out in the same manner as described for Examples 1-3, B and C. The amounts of $H_2S$ in the absorber off gas in each case is presented in Table IV below. These Examples show the improvements in using $H_3PO_4$ in very small amounts in the absorbing solution. The results of these two Examples do not appear to be directly comparable with the results of other Examples because of differences in processing and analytical techniques. However, a noticeable reduction in ppm of $H_2S$ is demonstrated upon the addition of very small amounts of $H_3PO_4$ to the absorbing solution.

TABLE IV

| Ex. | %$H_3PO_4$ | Mols $H_3PO_4$ Per Mol MDEA | % Protonation | PPM $H_2S$ In Off Gas |
|-----|-----------|------------------------------|---------------|------------------------|
| 9 | 0.321 | 0.0007915 | 0.158 | 12.5 |
| E | 0 | 0 | 0 | 16 |

EXAMPLES 10-13 and F

In each of these Examples a MDEA solution identical to that described in Example A above, that is, with no phosphoric acid addition, was prepared and fed to the top of the absorber at the rate of 6.3 cc/min. The feed gas rate in each case was 0.5 liter/min. The absorber contained 20 sieve trays.

In Example F no acid was added to the MDEA solution whereas in Examples 10-13 there was respectively added 0.015%, 0.0321%, 0.07% and 0.25% of phosphoric acid based on the total weight of the MDEA solution. The phosphoric acid was added in each case prior to the refluxing step. Thereafter, these Examples were carried out in the same manner as described for Examples 1-3, B and C. The amounts of $H_2S$ in the absorber off gas is presented in Table V below.

### TABLE V

| Ex. | %$H_3PO_4$ | Mols $H_3PO_4$ Per Mol MDEA | % Protonation | PPM $H_2S$ In Off Gas |
|-----|-----------|----------------------------|---------------|----------------------|
| F | 0 | 0 | 0 | 30 |
| 10 | 0.015 | 0.00037 | 0.074 | 28 |
| 11 | 0.0321 | 0.00079 | 0.158 | 2 |
| 12 | 0.07 | 0.00173 | 0.345 | 7 |
| 13 | 0.25 | 0.00618 | 1.24 | 2 |

These Examples show that even very small amounts of acid are effective in removing $H_2S$ and reducing $H_2S$ content in the absorber off gas down to low ppm levels. The results of these Examples are not directly comparable with the results of other Examples described herein because of certain differences in processing and analytical techniques.

### EXAMPLES 14-18 and G-Q

These Examples demonstrate various alkaline materials which have been found useful in the present invention, as compared to alkaline materials which do not fall within the select class of materials which provide for increases in acid gas scrubbing, i.e., removal, when compared to the corresponding absorbent solution free of acid or acid-forming materials. Alkaline absorbent solutions containing various alkaline material were prepared and tested using those procedures set forth for Examples 1-3, A and B, except for variations in alkaline solution pump rate as set forth in the footnotes for Table VI. Examples G-J correspond to the use of triethanolamine (TEA). Examples K-M correspond to the use of diisopropanolamine (DIPA). Examples 14 and N-P correspond to the use of diethanolamine (DEA). Examples 15-18 and Q correspond to the use of a DEA/MDEA mixture. Varying amounts of $H_3PO_4$ were added to each solution, given in weight percent, moles of acid per mole alkaline material, and % protonation as set forth in Table VI. The PPM $H_2S$ in the absorber off gas for each solution is given in Table VI.

13994-1

## TABLE VI

| Ex. | Alkaline Solution | % $H_3PO_4$ | Mols $H_3PO_4$ Per Mol Alkaline Material | % Protonation | PPM $H_2S$ In Off Gas |
|-----|-------------------|-------------|------------------------------------------|---------------|----------------------|
| G | TEA[a] | 0 | 0 | 0 | 170 |
| H | TEA[a] | 0.5 | 0.0152 | 3.04 | 690 |
| I | TEA[a] | 1.0 | 0.0304 | 6.08 | 1,900 |
| J | TEA[a] | 1.75 | 0.0532 | 10.6 | 3,000 |
| K | DIPA[b] | 0 | 0 | 0 | 57 |
| L | DIPA[b] | 0.3 | 0.0101 | 2.04 | 700 |
| M | DIPA[b] | 0.6 | 0.0204 | 4.07 | 1,100 |
| N | DEA[c] | 0 | 0 | 0 | 5 |
| 14 | DEA[c] | 0.3 | 0.0129 | 2.57 | 0 |
| O | DEA[c] | 0.6 | 0.0257 | 5.14 | 8 |
| P | DEA[c] | 1.5 | 0.0643 | 12.9 | 200 |
| Q | DEA/MDEA[d] | 0 | 0 | 0 | 60 |
| 15 | DEA/MDEA[d] | 0.35 | 0.00839 | 1.68 | 2 |
| 16 | DEA/MDEA[d] | 0.7 | 0.0168 | 3.36 | <0.5 |
| 17 | DEA/MDEA[d] | 1.4 | 0.0336 | 6.71 | <0.5 |
| 18 | DEA/MDEA[d] | 2.5 | 0.0559 | 12.0 | <0.5 |

[a]50% TEA/50% $H_2O$ at 12.3 ml/min.
[b]40% DIPA/60% $H_2O$ at 10.3 ml/min.
[c]25% DEA/75% $H_2O$ at 13.2 ml/min.
[d]5% DEA/45% MDEA/50% $H_2O$ at 13 ml/min.

The results of these Examples demonstrate that only a select class of alkaline materials are useable in aqueous alkaline solutions providing increased acid gas removal. These Examples also demonstrate that the critical amount of % protonation will vary between different alkaline absorbents, with effective DEA % protonation narrower and effective DEA/MDEA % protonation broader relative to the range for MDEA.

CLAIMS:

1. Composition for mixing with water to provide an aqueous, alkaline liquid which does not evolve an acidic gas upon acidification, for scrubbing hydrogen sulfide-containing acid gases comprising (1) an alkaline material capable of absorbing $H_2S$ in aqueous solution and (2) an acid having a $pK_a$ of 6 or less or an acid-forming material capable of forming in aqueous medium an acid having a $pK_a$ of 6 or less in an amount sufficient to protonate greater than 0% and not more than 22% of said alkaline material; such that said alkaline liquid provides for increased hydrogen sulfide removal when compared to the corresponding alkaline liquid free of said acid or acid-forming material.

2. Composition as claimed in claim 1 wherein said acid or acid forming material is present in an amount sufficient to protonate 2 to 13% of said alkaline material.

3. Composition as claimed in any of the preceding claims 1-2 wherein said acid has a $pK_a$ of less than 4.

4. Composition as claimed in any of the preceding claims 1-3 wherein said alkaline material is a secondary or tertiary diethanolamine, e.g. methyldiethanolamine, or mixture thereof.

5. Composition as claimed in any of the preceding claims 1-4 wherein an acid is used and said acid is phosphoric acid, formic acid or hydrochloric acid.

6.    Composition as claimed in any of the preceding claims 1-4 wherein an acid-forming material is used and said acid-forming material is sulphur dioxide.

7.    In a process for removing hydrogen sulfide as a constituent from gases by washing the gases with an aqueous alkaline scrubbing liquid containing an alkaline material which does not form an acidic gas upon acidification, and subsequently regenerating the scrubbing liquid, the improvement which comprises using in said scrubbing liquid, (1) an acid having a $pK_a$ of 6 or less or an acid-forming material capable of forming an acid having a $pK_a$ of 6 or less in aqueous medium in an amount sufficient to protonate more than 0% but not more than 22% of said alkaline material, and (2) an alkaline material which provides for increased hydrogen sulfide removal when compared to the corresponding alkaline liquid free of said acid or acid-forming material.

8.    Improvement as claimed in claim 7 wherein said alkaline material is a secondary or tertiary diethanolamine, e.g. methyldiethanolamine, or mixtures thereof.

9.    Improvement as claimed in any of the preceding claims 7-8 wherein an acid is used and said acid is phosphoric acid, formic acid or hydrochloric acid.

10.    Improvement as claimed in any of the preceding claims 7-8 wherein an acid-forming material is used and said acid-forming material is sulphur dioxide.

11.     An aqueous alkaline solution for scrubbing hydrogen sulfide-containing acid gases which comprise 5 to 60 wt. % of an alkaline material, which does not form an acidic gas upon acidification, based on the weight of the scrubbing liquid, an acid having a $pK_a$ of 6 or less or an acid-forming material capable of forming in aqueous medium an acid having a $pK_a$ of 6 or less, said acid or acid-forming material being present in an amount sufficient to protonate more than 0 % but not more than 22 %, e.g. 0.1 % to 22 %, of said alkaline material; such that said alkaline liquid provides for increased hydrogen sulfide removal when compared to the corresponding alkaline liquid free of said acid or acid-forming material, with the balance of said solution being water.

12.     Solution as claimed in claim 11 wherein said acid has a $pK_a$ of less than 4.

13.     Solution as claimed in any of the preceding claims 11-12 wherein said acid or acid-forming material is present in an amount sufficient to protonate from about 2 to about 13 % of said alkaline material in said solution.

14.     Solution as claimed in any of the preceding claims 11-13 wherein an acid is used and said acid is phosphoric acid, formic acid or hydrochloric acid.

15.     Solution as claimed in any of the preceding claims 11-13 wherein an acid-forming material is used and said acid-forming material is sulphur dioxide.

16. Solution as claimed in any of the preceding claims 11-15 wherein said alkaline material is a secondary or tertiary diethanolamine, e.g. methyldiethanolamine, or mixture thereof.

17. An aqueous alkaline solution for scrubbing hydrogen sulfide-containing acid gases which comprise 5 to 60 wt. % of a secondary or tertiary diethanolamine or mixtures thereof, based on the weight of the scrubbing liquid, an acid having a $pK_a$ of 6 or less or an acid-forming material capable of forming in aqueous medium an acid having a $pK_a$ of 6 or less, said acid or acid-forming material being present in an amount sufficient to protonate more than 0% but not more than 22% of said secondary or tertiary diethanolamine or mixtures thereof.

18. In a process for removing hydrogen sulfide as a constituent from gases by washing the gases with an aqueous alkaline scrubbing liquid containing a secondary or tertiary diethanolamine or mixtures thereof, and subsequently regenerating the scrubbing liquid, the improvement which comprises using in said scrubbing liquid an acid having a $pK_a$ of 6 or less or an acid-forming material capable of forming an acid having a $pK_a$ of 6 or less in aqueous medium in an amount sufficient to protonate more than 0% but not more than 22% of said secondary or tertiary diethanolamine or mixtures thereof.